# DEMANDE DE BREVET EUROPEEN

(11) **EP 0 824 992 A1**
(43) Date de publication de la demande: **25.02.1998**
(21) Numéro de dépôt: 97114057.9
(22) Date de dépôt: 14.08.1997
(51) Int. Cl.: B23K 37/08

(54) **Banc aspirant pour oxycoupage et découpage au plasma**

(30) Priorité: 22.08.1996 IT VI960135
(71) Demandeur: Simonato Dario (Ditta), 36030 Sarcedo (Vicenza) (IT)
(72) Inventeur: Simanato Dario, 36030 Sarcedo(Vicenza) (IT)
(74) Mandataire: Bettello, Pietro, Dott. Ing.

(57) **Abrégé**

Banc aspirant pour oxycoupage et découpage au plasma, du type comprenant un socle (3) qui supporte un plateau (2) à structure réticulaire ouverte, sur lequel on pose les tôles (1) à découper. Il se caractérise en ce qu'il comprend des moyens d'aspiration des fumées produites pendant le découpage de la tôle, ladite aspiration étant limitée et concentrée dans la seule zone de travail. Il comprend en outre des moyens aptes à recueillir les déchets de travail. Finalement, le plateau (2) est amovible.

## Description

La présente invention se rapporte à un banc pour travaux industriels d'oxycoupage et de découpage au plasma, selon le préambule de la revendication 1.

Parmi les diverses opérations industrielles, il existe le découpage de tôles de forte épaisseur, pour obtenir des produits semi-travaillés de différentes formes.

Les machines industrielles bien connues pour l'exécution des opérations de découpage sur des tôles de forte épaisseur comprennent essentiellement un socle horizontal de grandes dimensions, sur lequel sont disposées une ou plusieurs tôles qui doivent être soumises aux opérations de découpage.

Au-dessus du socle, se trouve une traverse sur laquelle sont placés des chalumeaux, du type "pour oxycoupage ou pour découpage au plasma", qui génèrent le cordon de coupe de la tôle.

Par la combinaison de l'éventuel mouvement des chalumeaux sur la traverse et du déplacement de la traverse elle-même au-dessus du socle, dans la direction longitudinale de ce dernier, on réalise des profils de découpage de la tôle de manière à en tirer des semi-produits plats convenablement profilés.

L'exécution de cette opération présente des inconvénients qui dérivent en particulier de la présence des fumées toxiques, qui se dégagent pendant le découpage de la tôle, ainsi que de la formation de déchets métalliques à éliminer.

Aussi bien les fumées que les déchets métalliques viennent s'accumuler dans la partie inférieure du socle qui soutient la tôle en cours de découpage, en rendant ainsi très difficile leur évacuation de la zone de travail.

Dans l'état actuel de la technique, pour l'évacuation des fumées, on a prévu des installations d'aspiration munies d'ouïes disposées latéralement au socle.

Etant donné que ce système doit agir sur un grand volume d'air à aspirer, puisque les socles ont des surfaces d'au moins quelque dizaines de mètres carrés, il exige l'emploi d'un moteur d'une grande puissance et, en outre, toujours en raison de la grande dimension de la surface de travail, on ne réussit pas avec ce système à assurer une action d'aspiration sur toute la surface.

La récupération des déchets de tôle est d'autant plus complexe que les déchets, constitués par des pièces métalliques de différents poids et de différentes formes, viennent se déposer sur le sol sous-jacent au socle, de sorte que, toujours en raison de la grande dimension du socle, leur évacuation de la zone de travail est difficile.

Le but de la présente invention est de réaliser un dispositif qui élimine les inconvénients décrits plus haut, en assurant une atmosphère de travail dans laquelle des fumées nocives sont rapidement éliminées et où la récupération des déchets de découpage s'effectue d'une façon simple et rapide.

A cet effet, l'invention a pour objet un banc conforme au préambule de la revendication 1, caractérisé en ce qu'il comporte des moyens d'aspiration des fumées produites pendant le découpage de la tôle, ladite aspiration étant limitée et concentrée dans la seule zone de travail,
en ce qu'il comporte des moyens aptes à recueillir les déchets de travail,
et en ce que le plateau est amovible.

On peut prévoir que le socle est réalisé sous forme de boîte, c'est-à-dire fermé aussi bien latéralement qu'en position basse, de manière à délimiter un volume placé au-dessous du plan de travail où les tôles à découper sont placées.

Selon une première caractéristique de l'invention, ce volume est subdivisé en une pluralité de secteurs, disposés transversalement, dans chacun desquels se trouve une cuvette amovible, dans laquelle les déchets et scories qui se forment dans la zone de découpage sus-jacente viennent se déposer.

Selon une autre caractéristique de l'invention, l'aspiration et l'évacuation des fumées qui se forment pendant le découpage de la tôle sont exercées exclusivement au droit de la zone de découpage, laquelle varie continuellement en fonction du déplacement longitudinal de la traverse qui supporte les chalumeaux.

La délimitation des zones où agit progressivement l'action d'aspiration des fumées correspond aux secteurs dans lesquels le volume en forme de boîte compris sous le socle qui supporte la tôle à découper est subdivisé.

Plus précisément, l'action d'aspiration des fumées intéresse exclusivement le volume dudit secteur dans lequel le groupe de chalumeaux sus-jacent opère pour le découpage au moment considéré.

Lorsqu'avec le déplacement de la traverse de support des chalumeaux de découpage, la zone sur laquelle le découpage agit se déplace elle aussi, l'action d'aspiration dans un secteur cesse pour activer l'aspiration du secteur suivant, à savoir celui qui se trouve au-dessous de la nouvelle zone de travail, et ainsi de suite jusqu'à intéresser toute la surface du socle.

Du point de vue du travail, cette aspiration localisée des fumées à évacuer est possible puisque, dans chaque secteur qui subdivise l'espace sous-jacent au socle, se trouve une chambre étanche dans laquelle, lorsque cela est nécessaire, on engendre une dépression, laquelle provoque l'aspiration des fumées qui se dégagent par suite de l'action de découpage de la tôle qui se déroule au-dessus.

Toutes les chambres qui intéressent l'ensemble de l'espace inférieur du socle communiquent avec un unique canal longitudinal à l'extrémité duquel est disposé le dispositif d'aspiration, par exemple un moteur électrique muni d'une hotte aspirante.

La liaison entre chaque chambre individuelle et le canal longitudinal est réalisée au moyen de cloisons, présentes sur les parois dudit canal, disposées pour chaque chambre et qui peuvent être mises en mouvement pour l'ouverture et la fermeture, au moyen d'un piston pneumatique.

L'ouverture progressive d'une seule cloison à la fois s'effectue de façon simultanée avec l'avancement longitudinal de la traverse portant les chalumeaux de découpage, de manière que l'action d'aspiration intéresse une seule chambre à la fois, plus précisément celle qui se trouve en ligne avec ladite traverse, c'est-à-dire en position sous-jacente auxdits chalumeaux.

Avec le système conforme à l'invention, outre qu'on réalise une aspiration des fumées qui est concentrée spécifiquement sur la zone de découpage, il est possible d'utiliser un aspirateur de puissance limitée, puisque le débit d'aspiration correspond seulement au volume de ladite chambre étanche, qui a une forme sensiblement annulaire et qui est délimitée par les parois séparatrices qui forment les différents secteurs longitudinaux successifs et la paroi de la cuvette insérée dans le secteur correspondant.

Finalement, il est avantageusement prévu que le plateau de travail sur lequel sont ancrées les tôles à découper soit simplement appuyé sur le reste de la structure porteuse du socle.

Avec cette solution, il est donc possible, à la fin des opérations de découpage, de décharger les pièces découpées de la machine, non pas en les prenant à la main une à une, mais en soulevant directement le plateau de travail, avec les pièces découpées, et en le remplaçant par un nouveau plateau sur lequel sont disposées les autres tôles à découper.

Ces caractéristiques ainsi que d'autres seront mieux mises en évidence par la description d'une forme possible de réalisation, donnée uniquement à titre d'exemple illustratif et non limitatif, à l'aide des planches de dessins sur lesquelles :

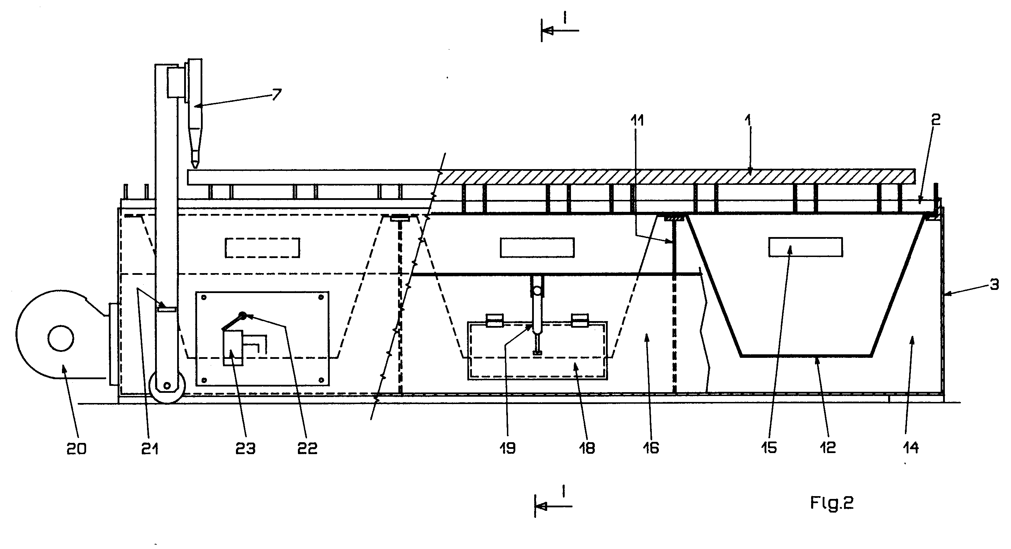

- La figure 1 (planche I) représente une vue transversale, en coupe selon la ligne I-I de la figure 2, du banc aspirant selon l'invention ;
la figure 2 (planche II) représente une vue en élévation et longitudinale de ce banc, partiellement découpée selon la ligne II-II de la figure 1.

Comme on peut le voir sur les figures, la tôle 1 à découper est placée sur le plateau 2, à structure réticulaire ouverte, qui est à son tour supporté par le socle 3.

Au-dessus du socle 3 se trouve la traverse 4, soutenue par les montants latéraux 5, munis de roues 6, et qui supporte des groupes de chalumeaux 7.

Le mouvement transversal des groupes de chalumeaux 7 sur la traverse 4 et le mouvement longitudinal de ladite traverse, qui sont simultanés et combinés, réalisent les profils de découpage prédéterminés sur la tôle 1.

Selon une première caractéristique de l'invention le socle 3 présente un volume fermé, en forme de boîte, au moyen de parois latérales 8 et d'un fond 9.

Le volume ainsi délimité est à son tour subdivisé en une pluralité de secteurs 10 transversaux, au moyen de parois séparatrices 11.

A l'intérieur de chaque secteur 10, est placée une cuvette 12, ouverte en haut et amovible, qui repose, par son bord, sur des profilés de support 13.

De cette façon, il se forme, dans chaque secteur 10, une chambre annulaire 14, extérieure à la cuvette 12, qui est mise en communication avec l'intérieur de ladite cuvette au moyen d'ouvertures latérales 15 présentes sur la paroi de cette cuvette.

Selon une autre caractéristique de l'invention, à l'intérieur du socle 3, se trouve un canal 16 qui s'étend longitudinalement et intéresse tous les secteurs transversaux 10.

Chaque secteur transversal 10 est mis en communication avec le canal longitudinal 16 au moyen de fentes 17, ménagées sur la paroi dudit canal et placées au droit de chacun desdits secteurs transversaux 10.

L'ouverture et la fermeture de chaque fente 17 s'effectue au moyen d'une cloison 18, qui peut être mise en mouvement par un cylindre pneumatique 19.

A l'extrémité du canal annulaire 16, se trouve un groupe d'aspiration 20 qui a pour fonction d'aspirer les fumées nocives qui se forment pendant le découpage de la tôle.

Selon une autre caractéristique de l'invention, l'action d'aspiration du groupe aspirant 20 agit sur un seul secteur transversal 10 à la fois, exactement au droit de celui au-dessus duquel le groupe de chalumeaux travaille à ce moment pour le découpage de la tôle.

Ceci est rendu possible par le fait que la cloison 18 se soulève, en ouvrant la fente 17, exclusivement lorsque la butée 21, solidaire du montant 5, qui se déplace longitudinalement avec les groupes de chalumeaux, rencontre le palpeur 22 de l'électrovalve 23, de sorte que cette dernière donne l'ordre au cylindre pneumatique 19 de soulever la cloison précitée et de mettre le canal 16 en communication avec la chambre annulaire 14.

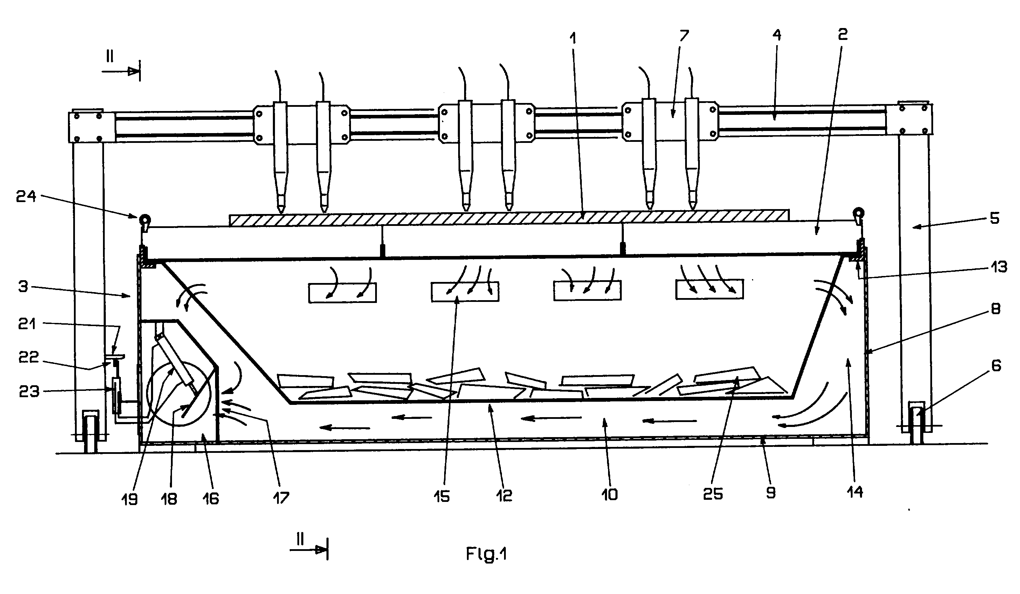

A la suite de l'action du groupe aspirant 20, il se développe une dépression dans la chambre annulaire 14 précitée, de sorte que les fumées qui se forment pendant l'action de découpage sont aspirées à travers les ouvertures latérales 15 sous-jacentes ménagées dans les parois de la cuvette 12, et, par l'intermédiaire du canal longitudinal 16, sont évacuées à l'extérieur du socle 3 (voir la direction des flèches de la figure 1).

Le plateau 2 est de préférence muni de crochets 24 qui permettent de le soulever et de le déplacer lorsque l'opération de découpage de la tôle 1 est terminée.

Lorsque le plateau 2 a été enlevé, il est possible d'extraire les cuvettes 12 des secteurs 10 respectifs et de les vider rapidement des déchets 25 qui y sont contenus.

Il est prévu en outre que le socle 3 soit réalisé, non pas sous la forme d'un unique bloc de tôle soudée mais sous la forme d'une structure modulaire, c'est-à-dire au moyen d'une pluralité de secteurs transversaux 10 mutuellement juxtaposés, de sorte qu'il est possible d'ajouter ou d'enlever des modules en fonction des exigences de la production.

Un autre avantage présenté par le banc aspirant selon l'invention consiste à pouvoir utiliser un seul type de groupe aspirant, de puissance réduite, indépendamment de l'étendue de la surface de travail.

En effet, l'augmentation ou la diminution de la surface de travail n'agit pas sur l'action d'aspiration, puisque cette dernière n'intéresse dans chaque cas qu'un seul secteur à la fois.

## Revendications

1. Banc aspirant pour oxycoupage et découpage au plasma, comprenant un socle (3) qui supporte un plateau (2), à structure réticulaire ouverte, sur lequel on pose les tôles (1) à découper, ainsi qu'une traverse (4) munie de montants latéraux (5) équipés de roues (6) et pouvant se déplacer longitudinalement, qui supporte les groupes chalumeaux (7), mobiles transversalement sur ladite traverse, caractérisé :
- en ce qu'il comporte des moyens d'aspiration des fumées produites pendant le découpage de la tôle, ladite aspiration étant limitée et concentrée dans la seule zone de travail,
- en ce qu'il comporte des moyens aptes à recueillir les déchets de travail,
- et en ce que le plateau (2) est amovible.

2. Banc aspirant selon la revendication 1, caractérisé en ce que le socle (3) présente un volume en forme de boîte, délimité par des parois latérales (8) et par un fond (9), ledit volume étant à son tour subdivisé en une pluralité de secteurs (10) à l'aide de parois séparatrices (11).

3. Banc aspirant selon les revendications 1 et 2, caractérisé en ce que, dans chaque secteur (10), est disposée une cuvette (12) ouverte en haut et amovible, apte à recueillir les déchets (25) du travail de découpage.

4. Banc aspirant selon la revendication 3, caractérisé en ce que, dans chaque secteur (10), est formée une chambre annulaire (14), extérieure à la cuvette (12) et mise en communication avec cette dernière au moyen d'ouvertures latérales (15) présentes sur la partie de cette dernière.

5. Banc aspirant selon une ou plusieurs des revendications précédentes, caractérisé en ce qu'à l'intérieur du socle (3), se trouve un canal (16), qui s'étend longitudinalement sur toute la longueur dudit socle et qui est muni à une de ses extrémités d'un groupe aspirant (20) qui a pour fonction d'aspirer les fumées qui se forment pendant la découpage de la tôle (1).

6. Banc aspirant selon la revendication 5, caractérisé en ce que chaque secteur transversal (10) est mis en communication avec le canal longitudinal (16) au moyen d'une fente (17) correspondante ménagée sur la paroi dudit canal, ladite fente étant ouverte ou fermée au moyen d'une cloison (18) mise en mouvement par un cylindre pneumatique (19).

7. Banc aspirant selon la revendication 6, caractérisé en ce que la cloison (18) se soulève seulement après qu'une butée (21), présente sur le montant (5), a touché un palpeur (22) d'une électrovalve (23) qui commande le cylindre pneumatique (19), de manière à ouvrir la fente (17) qui met le secteur transversal (10) correspondant en communication avec le canal longitudinal (16).

8. Banc aspirant selon une ou plusieurs des revendications précédentes, caractérisé en ce que l'action d'aspiration du groupe aspirant (20) ne s'exerce que sur un seul secteur transversal (10) à la fois, plus précisément, celui au-dessus duquel le groupe chalumeaux de découpage (7) agit à ce moment.

9. Banc aspirant selon la revendication 8, caractérisé en ce qu'à la suite du déplacement de la traverse (4), la zone sur laquelle agit le découpage des groupes chalumeaux (7) varie elle aussi, et que l'action d'aspiration d'un secteur (10) cesse pour activer l'aspiration dans un autre secteur, en particulier dans celui qui est sous-jacent à ladite nouvelle zone de travail.

10. Banc aspirant selon une ou plusieurs des revendications précédentes, caractérisé en ce que l'action d'aspiration du groupe aspirant (20), dans chaque secteur transversal (10) isolé, engendre une dépression dans la chambre annulaire (14) correspondante, de sorte que les fumées qui se forment pendant l'action de découpage sont aspirées à travers les ouvertures latérales (15) et qu'elles sont évacuées à l'extérieur du socle (3) au moyen du canal longitudinal (16).

11. Banc aspirant selon une ou plusieurs des revendications précédentes, caractérisé en ce que le plateau (2) est muni de crochets latéraux (24) permettant de le soulever et de l'éloigner du socle (3).

12. Banc aspirant selon une ou plusieurs des revendications précédentes, caractérisé en ce que le socle (3) présente une structure modulaire, réalisée avec une pluralité de secteurs transversaux (10), constituant chacun un élément unique, lesquels secteurs, mutuellement juxtaposés, venant former ledit socle, avec une dimension longitudinale prédéterminée.
